# EUROPÄISCHE PATENTSCHRIFT

(11) **EP 2 705 278 B1**
(45) Veröffentlichungstag und Bekanntmachung des Hinweises auf die Patenterteilung: **27.07.2016**
(21) Anmeldenummer: 12720413.9
(22) Anmeldetag: 30.04.2012
(51) Int. Cl.: F16H 57/04, F16H 61/02, F16H 61/688, F16H 61/00

(54) **KUPPLUNGSGETRIEBE**
CLUTCH TRANSMISSION
BOÎTE DE VITESSES À EMBRAYAGE

(30) Priorität: 06.05.2011 DE 102011100803
(43) Veröffentlichungstag der Anmeldung: 12.03.2014
(73) Patentinhaber: Audi AG, 85045 Ingolstadt (DE)
(72) Erfinder: SCHULLER, Dietmar, 93336 Altmannstein (DE); FLEISCHMANN, Hans-Peter, 85134 Stammham (DE); DEIMEL, Andreas, 85055 Ingolstadt (DE)
(74) Vertreter: Wohnert, Dietmar
(86) Internationale Anmeldenummer: PCT/EP2012/001850
(87) Internationale Veröffentlichungsnummer: WO 2012/152396

(56) Entgegenhaltungen:
- EP-A1- 1 486 693
- EP-A1- 1 814 009
- EP-A2- 1 420 186
- DE-A1-102005 046 635

## Beschreibung

Die Erfindung betrifft ein Kupplungsgetriebe, insbesondere Doppelkupplungsgetriebe, mit einem Hydraulikkreis zur Steuerung und Kühlung des Kupplungsgetriebes, insbesondere Doppelkupplungsgetriebes, insbesondere eines Kraftfahrzeuges, mit zwei Kupplungszylindern und einer Mehrzahl vorzugsweise doppelseitig ansteuerbarer Schaltzylinder.

Doppelkupplungsgetriebe werden bevorzugt in Personenkraftwagen eingesetzt. Ein Doppelkupplungsgetriebe weist im Allgemeinen zwei koaxial zueinander angeordnete Getriebeeingangswellen auf, die jeweils einem Teilgetriebe zugeordnet sind. Jeder der Getriebeeingangswellen ist eine Kupplung zugeordnet, über die die Getriebeeingangswelle des jeweiligen Teilgetriebes kraftschlüssig mit dem Abtrieb eines Motors, vorzugsweise eines Verbrennungsmotors eines Kraftfahrzeugs, gekoppelt werden kann. Ein erstes der beiden Teilgetriebe umfasst typischerweise die ungeraden Gänge, während ein zweites der Teilgetriebe die geraden Gänge sowie den Rückwärtsgang umfasst.

Während der Fahrt ist typischerweise eines der Teilgetriebe aktiv, was bedeutet, dass die diesem Teilgetriebe zugeordnete Getriebeeingangswelle über die ihr zugeordnete Kupplung mit dem Motor gekoppelt ist. In dem aktiven Teilgetriebe ist ein Gang eingelegt, der eine momentane Getriebeübersetzung bereitstellt. Eine Steuerung ermittelt, ob abhängig von der Fahrsituation der nächst höhere oder nächst niedrige Gang eingelegt werden soll. Dieser voraussichtlich als nächstes verwendete Gang wird in dem zweiten, inaktiven Teilgetriebe eingelegt. Für einen Gangwechsel wird dann die Kupplung des inaktiven Teilgetriebes geschlossen, während die Kupplung des aktiven Teilgetriebes geöffnet wird. Bevorzugt wird, wenn sich das Öffnen der Kupplung des aktiven Teilgetriebes und das Schließen der Kupplung des inaktiven Teilgetriebes derart überschneiden, dass keine oder nur eine geringfügige Kraftflussunterbrechung vom Motor auf die Antriebswelle des Kraftfahrzeugs gegeben ist. In Folge des Gangwechsels wird das zuvor aktive Teilgetriebe inaktiv, während das zuvor inaktive Teilgetriebe zum aktiven Teilgetriebe wird. Anschließend kann in dem nun inaktiven Teilgetriebe der voraussichtlich als nächstes benötigte Gang eingelegt werden.

Das Ein- und Auslegen der Gänge erfolgt über Elemente, bevorzugt über Schaltschienen, die von Hydraulikzylindern, den sogenannten, vorstehend bereits genannten Schaltzylindern, betätigt werden. Die Hydraulikzylinder sind bevorzugt als doppeltwirkende Hydraulikzylinder, insbesondere Gleichlaufzylinder oder Differenzialzylinder, ausgebildet, sodass jedem Schaltzylinder vorzugsweise zwei Gänge zugeordnet sein können. Alternativ können auch einfach wirkende Hydraulikzylinder vorgesehen sein. Die Hydraulikzylinder, welche die Elemente, insbesondere Schaltschienen, betätigen, werden auch als Gangstellerzylinder bezeichnet. Ein als Gleichlaufzylinder ausgebildeter Gangstellerzylinder, dem insbesondere zwei Gänge zugeordnet sind, weist bevorzugt drei Schaltpositionen auf, wobei insoweit in einer ersten ein bestimmter Gang, in einer zweiten ein anderer, bestimmter Gang und in einer dritten keiner der beiden genannten Gänge eingelegt ist.

Auch die den beiden Teilgetrieben zugeordneten Kupplungen werden hydraulisch betätigt, also geschlossen beziehungsweise geöffnet. Es wird bevorzugt, dass die Kupplungen jeweils schließen, wenn sie mit Hydraulikdruck beaufschlagt werden, während sie geöffnet sind, wenn kein Hydraulikdruck anliegt, das heißt ein der jeweiligen Kupplung zugeordneter Hydraulikzylinder, der - wie vorstehend erwähnt - auch Kupplungszylinder genannt wird, druckentlastet ist.

Im Übrigen ist die Funktionsweise eines Doppelkupplungsgetriebes an sich bekannt, sodass hier nicht näher darauf eingegangen wird.

Der in den vorstehenden Absätzen beschriebene Aufbau und die dort erläuterte Funktionsweise gilt bevorzugt auch beim oder im Zusammenhang mit dem Gegenstand der Erfindung.

Wie bereits angedeutet, werden Doppelkupplungsgetriebe durch einen Hydraulikkreis sowohl gesteuert beziehungsweise geregelt als auch gekühlt. Dieser Hydraulikkreis, beziehungsweise Baugruppen davon, sowie damit verknüpfte Verfahren sind Gegenstand der Erfindung.

Bekannte Kupplungsgetriebe, wie sie beispielsweise in der europäischen Patentschrift EP 1 486 693 B1 offenbart sind, umfassen ferner einen Kühler zum Kühlen des durch eine Pumpe geförderten Hydraulikmediums. Dabei ist dem Kühler für den Fall von kalten Umgebungsbedingungen zur Schnellaufwärmung des Kupplungsgetriebes ein thermostatisches Bypass-Ventil vorgesehen. Bei dem bekannten Kupplungsgetriebe soll also erreicht werden, dass das Hydraulikmedium nicht gekühlt, sondern zum schnellen Erreichen beispielsweise einer Betriebstemperatur an einem Kühler vorbeigeführt werden soll.

Ferner ist aus der Offenlegungsschrift EP 1 814 009 A1 ein Hydraulikkreis mit einem Thermostatventil bekannt, das als 4/3-Wege-Ventil ausgebildet ist, einen integrierten Bypass aufweist und zwischen Kühler und Ölversorgung geschaltet wird, so dass es den dem Kühler zugeführten Volumenstrom direkt steuert.

Aus der EP 1 420 186 A2 ist weiterhin ein Hydraulikkreis für ein Kupplungsgetriebe bekannt, welcher einen Bypass mit einem 2/2-Wege-Bypass-Ventil umfasst.

Darüber hinaus ist das Vorsehen eines Bypasses, der ein Differenzdruckventil umfasst, bekannt, um beispielsweise einen Druckfilter vor zu hohen Drücken zu schützen.

Weiterhin ist aus der gattungsbildenden Offenlegungsschrift DE 10 2005 046635 A1 ein Hydraulikkreis mit einem Kühler und einem Ventil, das als 3/3-Wege-Ventil ausgebildet ist, bekannt, wobei durch das Ventil auch der Durchfluss durch den Kühler direkt gesteuert wird.

Der Erfindung liegt die Aufgabe zugrunde, ein Kupplungsgetriebe zu schaffen, das eine Beschädigung des Fördersystems, also der mindestens einen Pumpe, sowie mit einem hohen Druckniveau einhergehende hohe Energieverbräuche zu vermeiden.

Die der Erfindung zugrundeliegende Aufgabe wir durch ein Kupplungsgetriebe mit den Merkmalen des Anspruchs 1 gelöst. Das erfindungsgemäße Kupplungsgetriebe zeichnet sich dadurch aus, dass das thermostatische Bypass-Ventil drei Schaltstellungen aufweist, wobei es in eine erste Schaltstellung durch Federkraft, aus der ersten Schaltstellung eine zweite Schaltstellung entgegen der Federkraft durch ein Thermoelement und aus der zweiten Schaltstellung in eine dritte Schaltstellung entgegen der Federkraft durch einen einen vorgebbaren Grenzwert übersteigenden Differenzdruck des Hydraulikmediums über das thermostatische Bypass-Ventil verfahrbar ist. Es ist somit ein Kupplungsgetriebe vorgesehen, dass einen einem Kühler zugeordneten Bypass mit einem thermostatischen Bypass-Ventil umfasst, wobei das Bypass-Ventil aus seiner Ausgangsstellung beziehungsweise ersten Schaltstellung durch das Thermoelement in eine zweite Stellung, und aus der zweiten Stellung in Abhängigkeit des Differenzdrucks über das Bypass-Ventil in eine dritte Schaltstellung verbracht wird. Das dem Bypass zugeordnete Bypass-Ventil kann somit in drei unterschiedliche Schaltstellungen verbracht werden. Dadurch ergibt sich eine hohe Flexibilität des Bypasses, der nunmehr nicht nur in Abhängigkeit der Temperatur, sondern auch in Abhängigkeit des Differenzdrucks über das Bypass-Ventil geschaltet wird.

Erfindungsgemäß ist in der ersten Schaltstellung der Bypass geöffnet, in der zweiten Schaltstellung gesperrt und in der dritten Schaltstellung wieder geöffnet. Hierdurch ergibt sich, dass in der Ausgangsstellung der Bypass geöffnet wird beziehungsweise ist. Die thermostatische Betätigungseinheit des thermostatischen Bypass-Ventils ist zweckmäßigerweise derart ausgebildet, dass das Thermoelement sich mit zunehmender Temperatur ausdehnt und dadurch das Bypass-Ventil aus der ersten Schaltstellung in die zweite Schaltstellung drängt. Dies hat zur Folge, dass bei niedrigen Temperaturen der Bypass geöffnet und bei Erreichen einer vorgebbaren, höheren Grenzwerttemperatur gesperrt wird. Somit ist bei niedrigen Temperaturen, wenn das Hydraulikmedium eine hohe Viskosität aufweist und somit eine hohe Leistung von der Pumpe beziehungsweise einer die Pumpe antreibenden Antriebsvorrichtung, wie beispielsweise ein Elektromotor, fordert,
der Bypass geöffnet, sodass das Hydraulikmedium an dem Kühler und/oder an einem dem Kühler vor- oder nachgeschalteten Druckfilter vorbeigeleitet wird. Dadurch wird der Rückstaudruck, der sich auf die Fördereinrichtung beziehungsweise auf die Pumpe auswirkt, verringert, wodurch die Antriebseinheit der Pumpe und/oder die Pumpe selbst kleiner dimensioniert werden kann, da ein geringerer Energieaufwand zum Fördern des Hydraulikmediums bei niedrigen Temperaturen von Nöten ist. Bei Erreichen der vorgebbaren Grenztemperatur, insbesondere entsprechend einer Betriebstemperatur des Kupplungsgetriebes, wird der Bypass durch die thermostatische Betätigungseinheit gesperrt, sodass das Hydraulikmedium, das sich dann in einem entsprechend vorteilhaften viskosen Zustand befindet, durch den Kühler und/oder den Druckfilter geführt. Treten Druckspitzen auf, die dafür sorgen, dass der Differenzdruck über das Bypass-Ventil einen vorgebaren Druck-Grenzwert überschreitet, so wird das Bypass-Ventil in seine dritte Schaltstellung gedrängt, in welcher der Bypass wieder geöffnet ist, sodass zum einen der Druckfilter und/oder der Kühler nicht beschädigt werden und zum anderen der Rückstaudruck auf die Fördereinrichtung oder andere stromaufwärts liegende Elemente des Kupplungsgetriebes sich nicht beschädigend auswirkt.

Vorzugsweise ist das Thermoelement als thermisches Wachselement ausgebildet, das insbesondere mit zunehmender Temperatur wächst, also in seiner Größe zunimmt, und somit eine Druckkraft auf das Bypass-Ventil beziehungsweise dessen Schieberelement ausübt. Dadurch lässt sich das Thermoelement auf einfache Art und Weise beispielsweise außerhalb des Bypass-Ventils als die thermostatische Betätigungseinheit anordnen. Alternativ ist auch eine integrierte Anordnung des Thermoelements innerhalb des Bypass-Ventils mit oder ohne Stößel denkbar.

Besonders bevorzugt sind das Thermoelement und/oder der Stößel derart ausgebildet, dass unabhängig von der auf das Thermoelement wirkenden Temperatur das thermostatische Bypass-Ventil durch das Thermoelement maximal in die zweite Schaltstellung verfahrbar ist. So ist es beispielsweise denkbar, den Stößel mit einem Anschlag zu versehen, der eine maximale Verlagerung des Stößels erlaubt, und/oder das Thermoelement derart auszubilden, dass es in seiner maximal erreichbaren Größe den Stößel nur bis zum Erreichen der zweiten Schaltstellung verlagern kann. Dadurch wird sichergestellt, dass bei weiter steigenden Temperaturen der Bypass nicht unerwünscht geöffnet wird. Stattdessen wird gewährleistet, dass der Bypass oberhalb der Grenztemperatur nur aufgrund des Überschreitens des Differenzdrucks geöffnet wird. Zur Ausbildung des thermostatischen Bypass-Ventils als Differenzdruckventil zum Erreichen der dritten Schaltstellung weist das thermostatische Bypass-Ventil vorzugsweise wenigstens eine Ventilfläche auf, der der Druck des Hydraulikkreises stromaufwärts oder stromabwärts des thermostatischen Bypass-Ventils zugeführt wird. Der Druck, der dann die Ventilfläche beaufschlagt, kann einer Federkraft und/oder dem Druck stromabwärts beziehungsweise stromaufwärts des thermostatischen Bypass-Ventils entgegenwirken. Hierdurch wird auf einfache Art und Weise ein Berücksichtigen des Differenzdrucks zum Verlagern des Bypass-Ventils in seine dritte Schaltstellung gewährleistet.

Weiterhin ist vorgesehen, dass der Stößel durch das Thermoelement zwangsgeführt ist, und/oder dass dem Stößel ein Federelement zugeordnet ist, das dem Thermoelement, insbesondere dem wachsenden Thermoelement, entgegenwirkt. Ist der Stößel durch das Thermoelement zwangsgeführt, so ist der Stößel fest mit dem Thermoelement verbunden, und wird durch das Thermoelement sowohl in die eine Richtung beim Wachsen als auch in die andere Richtung beim Schrumpfen des Thermoelements durch das Thermoelement selbst verlagert. Durch das Federelement wird der Stößel alternativ oder zusätzlich an dem Thermoelement in Berührungskontakt gehalten, sodass eine feste Verbindung zwischen dem Thermoelement und dem Stößel nicht notwendig ist. Bei Überschreiten des festgelegten Differenzdrucks löst sich bevorzugt das Bypass-Ventil beziehungsweise ein Ventilschieber des Bypass-Ventils von dem Stößel.

Im Folgenden soll der erfindungsgemäße Hydraulikkreis anhand der Zeichnung näher erläutert werden. Dazu zeigen
Figur 1 ein nicht erfindungsgemäßes Ausführungsbeispiel eines Hydraulikkreises zur Betätigung eines Doppelkupplungsgetriebes und
Figur 2 ein erfindungsgemäßes Ausführungsbeispiel des Hydraulikkreises.

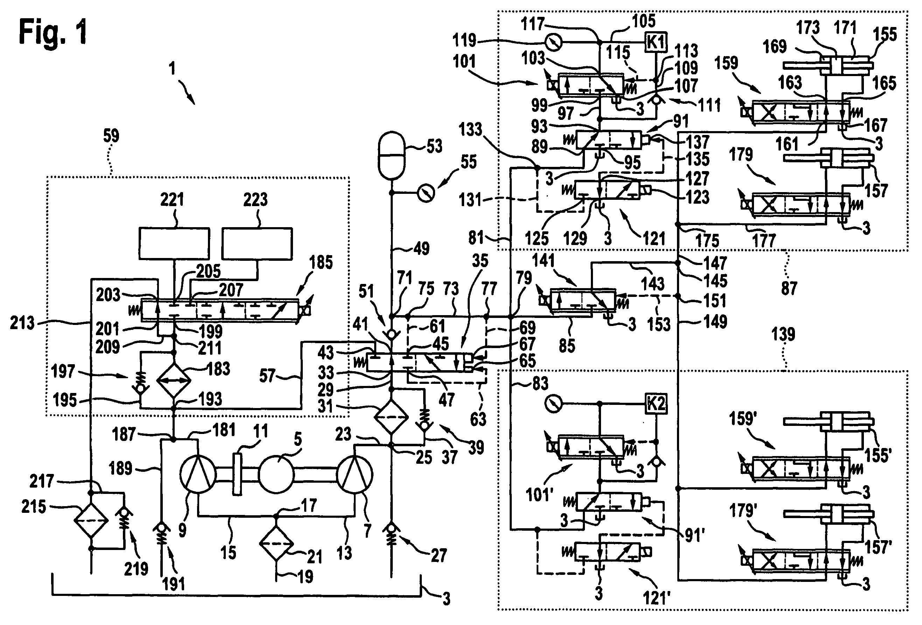

Figur 1 zeigt einen Hydraulikkreis 1, der der Betätigung, insbesondere dem Kuppeln sowie dem Ein- und Auslegen von Gängen, eines Doppelkupplungsgetriebes sowie dessen Kühlung dient. Der Hydraulikkreis 1 umfasst einen Tank 3, der insbesondere als Vorratsbehälter oder Sumpf für ein zur Betätigung und Kühlung verwendetes Hydraulikmedium dient, und in dem das Hydraulikmedium vorzugsweise drucklos gespeichert ist. Es ist ein Elektromotor 5 vorgesehen, der eine erste Pumpe 7 und eine zweite Pumpe 9 antreibt. Der Elektromotor 5 ist bevorzugt bezüglich seiner Drehzahl und Drehrichtung steuerbar, besonders bevorzugt regelbar. Die erste Pumpe 7 ist mit dem Elektromotor 5 fest verbunden, also ohne dass ein Trennelement vorgesehen ist. Dies bedeutet, dass die Pumpe 7 bei laufendem Elektromotor 5 stets angetrieben wird und Hydraulikmedium vorzugsweise in beiden Drehrichtungen gleichgerichtet fördert. Die Pumpe 9 ist bevorzugt über ein Trennelement 11 mit dem Elektromotor 5 verbunden. Es ist also möglich, die Pumpe 9 von dem Elektromotor 5 abzukoppeln, sodass sie nicht läuft, wenn der Elektromotor 5 läuft. Das Trennelement 11 ist vorzugsweise als Kupplung oder als Freilauf ausgebildet, wobei im zweiten Fall über die Drehrichtung des Elektromotors 5 bestimmt werden kann, ob von der Pumpe 9 Hydraulikmedium gefördert wird oder nicht.

Die erste Pumpe 7 und die zweite Pumpe 9 sind jeweils über eine Leitung 13, 15 mit einer Abzweigung 17 verbunden, in die eine weitere Leitung 19 mündet. Diese verbindet den Tank 3 über einen Saugfilter 21 mit der Abzweigung 17. Insgesamt sind damit Einlässe der Pumpen 7, 9 über die Leitungen 13, 15, die Abzweigung 17 und die den Saugfilter 21 aufweisende Leitung 19 mit dem Tank 3 verbunden.

Der Auslass der ersten Pumpe 7 ist mit einer Leitung 23 verbunden, die zu einer Abzweigung 25 führt. Die Abzweigung 25 ist über ein Druckbegrenzungsventil 27 mit dem Tank 3 verbunden. Das Druckbegrenzungsventil 27 kann bei Überdruck in Richtung des Tanks 3 öffnen. Außerdem geht von der Abzweigung 25 eine Leitung 29 aus, die über einen Druckfilter 31 zu einem Anschluss 33 eines Schaltventils 35 führt.

Der Druckfilter 31 ist durch einen Bypass 37 überbrückbar, wobei in dem Bypass 37 ein Differenzdruckventil 39 angeordnet ist, welches bei Überdruck eine Überbrückung des Filters 31 in Richtung auf den Anschluss 33 ermöglicht. Ein Öffnen des Differenzdruckventils 39 erfolgt ab einem vorgegebenen Differenzdruck über den Druckfilter 31.

Das Schaltventil 35 ist als 5/2-Wegeventil ausgebildet, welches außer dem Anschluss 33 vier weitere Anschlüsse 41, 43, 45, 47 aufweist. In einem ersten, in Figur 1 dargestellten Schaltzustand des Schaltventils 35 ist der Anschluss 33 mit dem Anschluss 41 verbunden, während die weiteren Anschlüsse 43, 45 und 47 blind, also geschlossen, geschaltet sind. Der Anschluss 41 mündet in eine Leitung 49, in der ein Rückschlagventil 51 angeordnet ist. Die Leitung 49 führt zu einem Druckspeicher 53, wobei vor dem Druckspeicher 53 eine Druckerfassungseinrichtung 55 mit der Leitung 49 hydraulisch verbunden ist.

In einem zweiten, aus der Figur 1 entnehmbaren Schaltzustand des Schaltventils 35 ist der Anschluss 33 mit dem Anschluss 43 verbunden, der in eine Leitung 57 mündet, die zu einem Hydraulikteilkreis 59 führt, der insbesondere der Kühlung von Kupplungen des Doppelkupplungsgetriebes dient. In diesem zweiten Schaltzustand ist der Anschluss 41 blind geschaltet und der Anschluss 45 ist mit dem Anschluss 47 verbunden. Dabei mündet in den Anschluss 45 eine Leitung 61, die mit dem Druck des Hydraulikmediums im Druckspeicher 53 beaufschlagt ist. Der Anschluss 47 mündet in eine Leitung 63, die mit einer ersten Ventilfläche 65 des Schaltventils 35 hydraulisch verbunden ist. Eine zweite Ventilfläche 67 des Schaltventils 35 ist über eine Leitung 69 permanent mit dem Druck des Druckspeichers 53 beaufschlagt.

Von der Leitung 49 zweigt an einer Abzweigung 71 eine Leitung 73 ab, von der wiederum in einer Abzweigung 75 die Leitung 61 und in einer Abzweigung 77 die Leitung 69 abzweigt. Die Abzweigung 71 ist auf der dem Schaltventil 35 abgewandten Seite des Rückschlagventils 51 an diesem angeschlossen.

Die Leitung 73 mündet in einer Abzweigung 79, von der Leitungen 81, 83 und 85 ausgehen.

Die Leitung 81 führt in einen Teilgetriebekreis 87 zur Versorgung eines ersten Teilgetriebes. Das erste Teilgetriebe weist eine Kupplung K1 auf. Die Leitung 81 mündet in einen Anschluss 89 eines Schaltventils 91, das als 3/2-Wegeventil ausgebildet ist, und als Sicherheitsventil für die Kupplung K1 dient. In einem ersten, dargestellten Schaltzustand des Schaltventils 91 ist der Anschluss 89 mit einem Anschluss 93 hydraulisch verbunden, während ein Anschluss 95 des Schaltventils 91 blind geschaltet ist. In einem zweiten, der Figur 1 entnehmbaren Schaltzustand des Schaltventils 91 ist der Anschluss 93 mit dem Anschluss 95 und über diesen mit dem Tank 3 verbunden, während der Anschluss 89 blind geschaltet ist. Wie im Folgenden deutlich wird, wird in diesem zweiten Schaltzustand die Kupplung K1 drucklos geschaltet.

Der Anschluss 93 ist mit einer Leitung 97 und über diese mit einem Anschluss 99 eines Druckregelventils 101 verbunden. Das Druckregelventil 101 ist als 3/2-Wege-Proportionalventil ausgebildet, das einen Anschluss 103 aufweist, der über eine Leitung 105 mit der Kupplung K1 verbunden ist. Das Druckregelventil 101 weist ferner einen Anschluss 107 auf, der mit dem Tank 3 verbunden ist. In einem ersten Extremalzustand des Druckregelventils 101 ist der Anschluss 99 mit dem Anschluss 103 verbunden, während der Anschluss 107 blind geschaltet ist. In diesem Fall wirkt der volle, in der Leitung 97 herrschende Druck des Hydraulikmediums auf die Kupplung K1. In einem zweiten Extremalzustand ist der Anschluss 103 mit dem Anschluss 107 verbunden, sodass die Kupplung K1 drucklos ist. Durch proportionale Variation zwischen diesen Extremalzuständen regelt das Druckregelventil 101 in an sich bekannter Weise den in der Kupplung K1 herrschenden Druck. Von der Kupplung K1 führt eine Leitung 109 über ein Rückschlagventil 111 zurück zur Leitung 97. Falls der Druck in der Kupplung K1 über den Druck in der Leitung 97 steigt, öffnet das Rückschlagventil 111, wodurch eine hydraulische Verbindung zwischen der Kupplung K1 über die Leitung 109 mit der Leitung 97 freigegeben wird. Von der Leitung 109 zweigt in einer Abzweigung 113 eine Leitung 115 ab, die den Druck in der Kupplung K1 als Regelgröße an das Druckregelventil 101 zurückgibt.

In der Leitung 105 ist eine Abzweigung 117 vorgesehen, durch die eine Druckerfassungseinrichtung 119 hydraulisch wirkverbunden ist. Auf diese Weise wird der in der Kupplung K1 herrschende Druck durch die Druckerfassungseinrichtung 119 erfasst.

Das Schaltventil 91 wird von einem Pilotventil 121 angesteuert. Dieses wird durch einen elektrischen Aktor 123 betätigt. Es ist als 3/2-Wegeventil ausgebildet und umfasst die Anschlüsse 125, 127 und 129. Der Anschluss 125 ist über eine Leitung 131 mit einer in der Leitung 81 vorgesehenen Abzweigung 133 verbunden. Der Anschluss 127 ist über eine Leitung 135 mit einer Ventilfläche 137 des Schaltventils 91 verbunden. In einem ersten, hier dargestellten Schaltzustand des Pilotventils 121 ist der Anschluss 125 blind geschaltet, während der Anschluss 127 mit dem Anschluss 129 und über diesen mit dem Tank 3 verbunden ist, wodurch die Ventilfläche 137 des Schaltventils 91 über die Leitung 135 drucklos geschaltet ist. Vorzugsweise nimmt das Pilotventil 121 diesen Schaltzustand ein, wenn kein elektrisches Steuersignal an dem Aktor 123 anliegt. In einem zweiten einnehmbaren Schaltzustand des Pilotventils 121 ist der Anschluss 125 mit dem Anschluss 127 verbunden, während der Anschluss 129 blind geschaltet ist. In diesem Fall wirkt der in der Leitung 81 herrschende Druck über die Abzweigung 133, die Leitung 131 und die Leitung 135 auf die Ventilfläche 137 des Schaltventils 91, wodurch dieses entgegen einer Vorspannkraft in seinen zweiten Schaltzustand geschaltet wird, in dem der Anschluss 93 mit dem Anschluss 95 hydraulisch verbunden ist, sodass die Kupplung K1 drucklos geschaltet wird. Vorzugsweise kann also durch elektrische Ansteuerung des Pilotventils 121 das Schaltventil 91 so betätigt werden, dass die Kupplung K1 drucklos geschaltet und damit geöffnet ist.

Die von der Abzweigung 79 ausgehende Leitung 83 dient der Versorgung einer Kupplung K2 eines Teilhydraulikkreises 139 eines zweiten Teilgetriebes. Die Ansteuerung der Kupplung K2 umfasst ebenfalls ein Schaltventil 91', ein Pilotventil 121' und ein Druckregelventil 101'. Die Funktionsweise ist die gleiche, die bereits in Zusammenhang mit der ersten Kupplung K1 beschrieben wurde. Aus diesem Grund wird auf die entsprechende Beschreibung zum Teilgetriebekreis 87 verwiesen. Die hydraulische Ansteuerung der Kupplung K2 entspricht derjenigen der Kupplung K1.

Die von der Abzweigung 79 ausgehende Leitung 85 ist mit einem Druckregelventil 141 verbunden, über das der Druck des Hydraulikmediums in einer Leitung 143 regelbar ist. Die Funktionsweise des Druckregelventils 141 entspricht vorzugsweise der Funktionsweise der Druckregelventile 101, 101', sodass hier eine erneute Beschreibung nicht notwendig ist. Die Leitung 143 ist mit einer Abzweigung 145 verbunden, von der eine Leitung 147 und eine Leitung 149 ausgehen. In der Leitung 149 ist eine Abzweigung 151 vorgesehen, von der eine Leitung 153 ausgeht, über die der in der Leitung 149 und damit der in der Leitung 143 herrschende Druck als Regelgröße an das Druckregelventil 141 zurückgegeben wird. Es ist offensichtlich, dass die Abzweigung 151 auch in den Leitungen 151 oder 147 vorgesehen sein kann.

Die Leitung 147 dient der Versorgung von Gangstellerzylindern 155 und 157 in dem Teilgetriebekreis 87, die als zwei doppelt wirkende Zylinder, also Gleichlaufzylinder, ausgebildet sind.

Zur hydraulischen Ansteuerung des Gangstellerzylinders 155 ist ein Volumensteuerventil 159 vorgesehen, das als 4/3-Wege-Proportionalventil ausgebildet ist. Es weist vier Anschlüsse 161, 163, 165 und 167 auf. Der erste Anschluss 161 ist mit der Leitung 147 verbunden, der zweite Anschluss 163 ist mit einer ersten Kammer 169 des Gangstellerzylinders 155 verbunden, der dritte Anschluss 165 ist mit einer zweiten Kammer 171 des Gangstellerzylinders 155 verbunden und der vierte Anschluss 167 ist mit dem Tank 3 verbunden. In einem ersten Extremalzustand des Volumensteuerventils 159 ist der erste Anschluss 161 mit dem zweiten Anschluss 163 verbunden, während der dritte Anschluss 165 mit dem vierten Anschluss 167 verbunden ist. In diesem Fall kann Hydraulikmedium von der Leitung 147 in die erste Kammer 169 des Gangstellerzylinders 155 fließen, während die zweite Kammer 171 über die Anschlüsse 165, 167 zum Tank 3 hin drucklos geschaltet ist. Auf diese Weise wird ein Kolben 173 des Gangstellerzylinders 155 in eine erste Richtung bewegt, um beispielsweise einen bestimmten Gang des Doppelkupplungsgetriebes aus- beziehungsweise einen anderen bestimmten Gang einzulegen.

In einem zweiten Extremalzustand des Volumensteuerventils 159 werden sowohl der Anschluss 163 als auch der Anschluss 165 mit dem Anschluss 167 verbunden, wobei der Anschluss 161 blind geschaltet wird. Auf diese Weise sind beide Kammern 169, 171 des Gangstellerzylinders 155 mit dem Tank 3 verbunden, sodass sie drucklos geschaltet sind. Der Kolben 173 des Gangstellzylinders 155 verharrt dann in seiner momentanen Position, weil keine Kräfte auf ihn wirken.

In einem dritten Extremalzustand des Volumensteuerventils 159 ist der Anschluss 161 mit dem Anschluss 165 verbunden und der Anschluss 163 mit dem Anschluss 167. In diesem Fall fließt Hydraulikmedium von der Leitung 147 in die zweite Kammer 171 des Gangstellenzylinders 155 und die erste Kammer 169 wird über den Anschluss 163 und den Anschluss 167 zum Tank 3 hin drucklos geschaltet. Das Hydraulikmedium übt dann eine Kraft auf den Kolben 173 des Gangstellerzylinders 155 derart aus, dass er in eine zur ersten Richtung entgegengesetzte zweite Richtung verlagert wird. Auf diese Weise kann der zuvor erwähnte bestimmte andere Gang aus- beziehungsweise der erwähnte bestimmte Gang eingelegt werden.

Wie bereits beschrieben, ist das Volumensteuerventil 159 als Proportionalventil ausgebildet. Der von der Leitung 147 kommende Hydraulikmedienstrom wird durch Variation der Ventilzustände zwischen den drei Extremalzuständen auf die Kammern 169, 171 aufgeteilt, sodass es möglich ist, durch Steuerung/Regelung des Volumenstroms eine definierte Geschwindigkeit für den Ein- beziehungsweise Auslegevorgang eines Gangs vorzugeben.

Von der Leitung 147 zweigt in einer Abzweigung 175 eine Leitung 177 ab, die in ein Volumensteuerventil 179 mündet, welches der Ansteuerung des Gangstellerzylinders 157 dient. Die Funktionsweise der hydraulischen Ansteuerung des Gangstellzylinders 157 ist die gleiche, die in Zusammenhang mit dem Gangstellerzylinder 155 beschrieben wurde. Eine erneute Beschreibung ist daher nicht notwendig.

Die Leitung 149 dient der Versorgung von Gangsstellerzylindern 155' und 157' des zweiten Teilgetriebes im Teilgetriebekreis 139. Auch zu deren Ansteuerung sind Volumensteuerventile 159' und 179' vorgesehen. Die Teilgetriebekreise 87 und 139 sind bezüglich der Ansteuerung der Gangsstellerzylinder 155, 155' beziehungsweise 157, 157' identisch ausgebildet, sodass auf die vorangegangene Beschreibung verwiesen wird.

Der Auslass der Pumpe 9 ist mit einer Leitung 181 verbunden, die zu dem Hydraulikteilkreis 59 führt, welcher vorzugsweise insbesondere der Kühlung der Kupplungen K1, K2 dient. Die Leitung 181 führt über einen Kühler 183 zu einem Volumensteuerventil 185. Hinter dem Auslass der Pumpe 9 und vor dem Kühler 183 ist eine Abzweigung 187 in der Leitung 181 vorgesehen, von der eine Leitung 189 abzweigt, die über ein in Richtung auf den Tank 3 öffnendes Druckbegrenzungsventil 191 zum Tank 3 führt. Hinter der Abzweigung 187 und vor dem Kühler 183 ist eine Abzweigung 193 vorgesehen, in die die Leitung 57 mündet, die von dem Schaltventil 35 kommt und mit dessen Anschluss 43 verbunden ist. Über die Leitung 57 ist es möglich, den Hydraulikteilkreis 59 mit von der Pumpe 7 gefördertem Hydraulikmedium zu versorgen, wenn sich das Schaltventil 35 in seinem zweiten Schaltzustand befindet. Außerdem zweigt von der Abzweigung 193 ein Bypass 195 ab, der ein Differenzdruckventil 197 aufweist und zum Kühler 183 parallel liegt. Das Differenzdruckventil 197 gibt bei Überdruck den Bypass in Richtung auf das Volumensteuerventil 185 frei. Auf diese Weise kann der Kühler 183 überbrückt werden.

Das Volumensteuerventil 185 ist als 4/3-Wege-Proportionalventil ausgebildet, das Anschlüsse 199, 201, 203, 205 und 207 aufweist. Der Anschluss 199 ist mit der Leitung 181 über den Kühler 183 beziehungsweise das Differenzdruckventil 197 verbunden, ebenso wie der Anschluss 201, der über eine Leitung 209 und eine Abzweigung 211 mit der Leitung 181 verbunden ist. Die Anschlüsse 199 und 201 bilden also, da sie beide mit der Leitung 181 stromabwärts des Kühlers 183 verbunden sind, einen gemeinsamen Anschluss des Volumensteuerventils 185. Nur aus Übersichtlichkeitsgründen sind zwei Anschlüsse 199, 201 gezeichnet, tatsächlich ist jedoch nur ein Anschluss, beispielsweise 199 oder 201, für die Leitung 181 an dem Volumensteuerventil 185 vorgesehen, wobei gemäß einem alternativen Ausführungsbeispiel das Volumensteuerventil 185 auch tatsächlich mit den zwei getrennten Anschlüssen 199, 201 als 5/3-Wege-Proportionalventil ausgebildet sein kann. Zum besseren Verständnis beziehen sich die folgenden Ausführungen auf die dargestellte Ausbildung, wobei zu berücksichtigen ist, dass es sich bei den Anschlüssen 199 und 201 eigentlich nur um einen Anschluss handelt, der entsprechend geschaltet wird. Der Anschluss 203 ist mit einer Leitung 213 verbunden, die über einen Druckfilter 215 zum Tank 3 führt. Der Druckfilter 215 ist durch einen Bypass 217 mit in Richtung auf den Tank 3 öffnendem Differenzdruckventil 219 überbrückbar.

Der Anschluss 205 des Volumensteuerventils 185 ist mit einer Kühlung 221 insbesondere für die erste Kupplung K1 verbunden. Der Anschluss 207 ist mit einer zweiten Kühlung 223 insbesondere für die zweite Kupplung K2 verbunden.

In einem ersten, in der Figur 1 dargestellten Extremalzustand des Volumensteuerventils 185 ist der Anschluss 201 mit dem Anschluss 203 verbunden, während die Anschlüsse 199, 205 und 207 blind geschaltet sind. Der gesamte in der Hydraulikleitung 181 beziehungsweise durch den Kühler 183 strömende Hydraulikmedienstrom wird also über die Anschlüsse 201, 203 in die Leitung 213 und damit über den Druckfilter 215 in den Tank 3 geleitet.

In einem zweiten Extremalzustand sind die Anschlüsse 199 und 205 miteinander verbunden, während die Anschlüsse 201, 203 und 207 blind geschaltet sind. In diesem Zustand wird der gesamte am Volumensteuerventil 185 ankommende Hydraulikmedienstrom der ersten Kühlung 221 zugeführt.

In einem dritten Extremalzustand des Volumensteuerventils 185 sind die Anschlüsse 199 und 207 miteinander verbunden. Die Anschlüsse 201, 203 und 205 sind blind geschaltet. In diesem Zustand wird demnach der gesamte in der Leitung 181 fließende Hydraulikmedienstrom der zweiten Kühlung 223 zugeführt.

Wie bereits ausgeführt, ist das Volumensteuerventil 185 als Proportionalventil ausgebildet, sodass Zwischenzustände zwischen den beschriebenen Extremalzuständen eingestellt werden können, wodurch der Volumenstrom zu den Kühlungen 221, 223 beziehungsweise zum Druckfilter 215 regelbar ist. Es ist auch möglich, das Volumensteuerventil 185 getaktet zu betreiben, wobei jeweils kurzzeitig mindestens einer der drei Extremalzustände angenommen wird. Auch bei dieser Betriebsart wird im Zeitmittel der Volumenstrom gesteuert oder geregelt, der den Kühlungen 221, 223 beziehungsweise dem Druckfilter 215 und damit dem Tank 3 zugeleitet wird.

Die Figur 1 zeigt, dass zusätzlich zum in der Leitung 181 vorhandenen Hydraulikmediumstrom ein Hydraulikmediumstrom der Leitung 57 treten und dem Hydraulikteilkreis 59 zugeführt werden kann. Alternativ ist es auch möglich, dass nur die Leitung 57 Hydraulikmedium einspeist. Zu erwähnen ist noch, dass die Proportionalventile 101, 101', 141, 159, 159', 179, 179', 185 jeweils insbesondere gegen Federkraft elektrisch proportional verstellbar sind.

Wie oben bereits ausgeführt, mündet die Leitung 57 in den Hydraulikteilkreis 59, genauer gesagt in die Leitung 181 stromabwärts der Pumpe 9. Gemäß einer alternativen, hier nicht dargestellten Ausführungsform mündet die Leitung 57 in die Leitung 181 bevorzugt stromabwärts des Kühlers 183. Durch die Zuführung des Hydraulikmediums aus dem Hochdruckkreis in den Hydraulikteilkreis 59 gemäß der alternativen Ausführungsform wird der Gesamtvolumenstrom durch den Kühler 183 reduziert. Durch den reduzierten Volumenstrom wird der Druckabfall über den Kühler 183 reduziert, wodurch die notwendige Antriebsenergie für die Pumpen 7 und/oder 9 verringert wird. Durch eine Reduktion der Rückstaudrücke wird also die für den Elektromotor 5 benötigte Antriebsenergie reduziert. Bei einer ausreichend hohen Reduktion der Rückstaudrücke beziehungsweise des Druckniveaus - unabhängig davon, wie die Reduktion erreicht wird - ist gemäß einer weiteren Ausführungsform vorgesehen, die Pumpe 9 mit dem Elektromotor 5 direkt zu verbinden, die dargestellte Trennkupplung 11 also zu entfernen.

Gemäß einer weiteren, hier nicht dargestellten Ausführungsform bezüglich der Anordnung des Druckfilters 215 ist vorgesehen, dass dieser nicht zwischen Volumensteuerventil 185 und Tank 3 in der Leitung 213, sondern vorzugsweise in der Leitung 181, insbesondere zwischen dem Kühler 183 und dem Volumensteuerventil 185, angeordnet ist. Vorzugsweise mündet dabei die Leitung 57 stromabwärts des Druckfilters 215 in die Leitung 181. Durch die alternative Anordnung des Druckfilters 215, der nunmehr im Hauptstrom des Hydraulikmediums liegt, werden die Zeitanteile erhöht, innerhalb derer das Hydraulikmedium durch den Druckfilter 215 gefiltert wird. Das Bypass-Ventil 219 wird dabei vorzugsweise auf einen minimalen Rückstaudruck über den Volumenstrom ausgelegt.

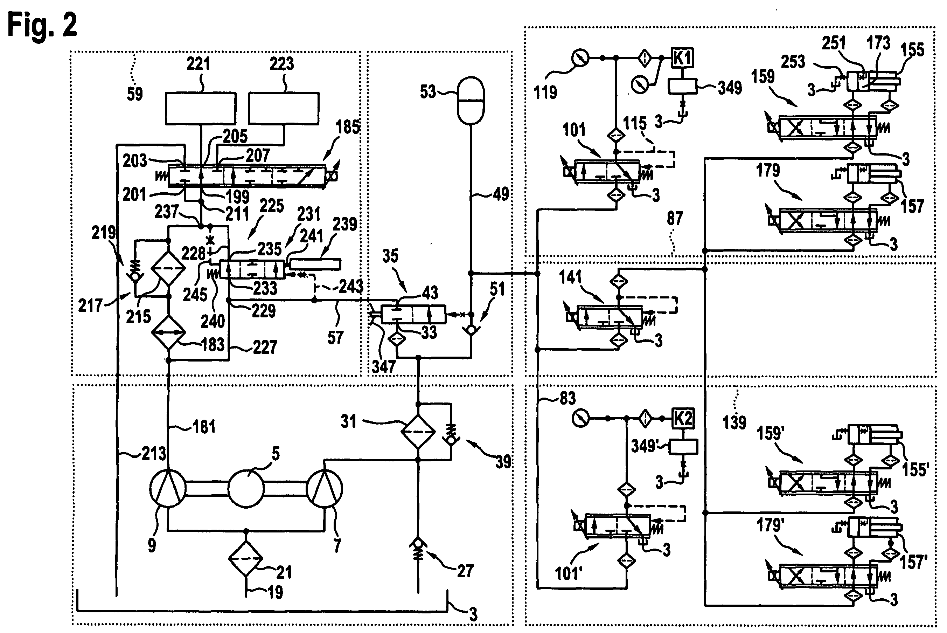

Figur 2 zeigt ein bevorzugtes Ausführungsbeispiel des Hydraulikkreises 1, insbesondere im Hinblick auf den Kühler 183 und den Druckfilter 215, wobei bekannte Elemente mit den gleichen Bezugszeichen versehen sind, sodass insofern auf die oben stehende Beschreibung verwiesen wird. Im Folgenden soll im Wesentlichen nur auf die Unterschiede eingegangen werden.

Der wesentliche Unterschied zu dem vorhergehenden Ausführungsbeispiel liegt darin, dass dem Kühler 183 und dem Druckfilter 215 ein Bypass 225 zugeordnet ist. Dazu ist der Druckfilter 215 stromabwärts des Volumensteuerventils 185 in der Leitung 181 mitsamt seinem Bypass 217 vorgesehen. Stromaufwärts des Kühlers 183 zweigt eine Leitung 227 ab, die an einem Knotenpunkt 229 mit der Leitung 57 zusammengeführt wird. Stromabwärts des Knotenpunkts 229 ist ein Bypass-Ventil 231 vorgesehen, das als 2/3-Wegeventil, insbesondere als Schaltventil oder Proportionalventil, ausgebildet ist und dazu zwei Anschlüsse 233 und 235 aufweist. Der Anschluss 233 ist dabei mit dem Knotenpunkt 229 und der Anschluss 235 mit der Leitung 181 über einen Knotenpunkt 237 und eine Leitung 228 verbunden. Das Bypass-Ventil 231 weist drei Schaltstellungen auf, wobei in einer ersten Schaltstellung der Anschluss 233 mit dem Anschluss 235 verbunden ist, in einer mittleren, zweiten Schaltstellung beide Anschlüsse blind geschaltet und in einer dritten Schaltstellung die Anschlüsse 233 und 235 wieder miteinander verbunden sind. Somit ist in der ersten Schaltstellung der Bypass 225 geöffnet, in der zweiten Stellung gesperrt und in der dritten Schaltstellung wieder geöffnet. Die unterschiedlichen Schaltstellungen sind dabei vorzugsweise nur in der genannten Reihenfolge anfahrbar. Das Bypass-Ventil 231 ist als thermostatisches Bypass-Ventil 231 ausgebildet und umfasst dazu eine thermostatische Betätigungseinheit beziehungsweise Thermoeinheit 239, die ein Thermoelement umfasst, welches auf das Bypass-Ventil 231, insbesondere auf einen Schieber oder Drehschieber des Bypass-Ventils 231, wirkt. Dazu ist das Thermoelement als thermisches Wachselement ausgebildet und über einen Stößel 241 mit dem Bypass-Ventil 231 beziehungsweise mit dessen Schieber/Drehschieber verbunden. Das wachsende Thermoelement beaufschlagt dabei das Bypass-Ventil 231 entgegen der Kraft eines Federelements 240, um es aus der ersten Schaltstellung in die zweite Schaltstellung zu verlagern. Dabei ist die Thermoeinheit 239 beziehungsweise das Thermoelement und der Stößel 241 derart ausgebildet, dass das thermostatische Bypass-Ventil 231 durch das Thermoelement maximal in die zweite Schaltstellung verschiebbar beziehungsweise verschaltbar ist. Dazu kann beispielsweise die Größe des Thermoelements und/oder dessen Wärmeausdehnungskoeffizient entsprechend gewählt oder dem Thermoelement oder dem Stößel 241 ein Verfahr-Anschlag zugeordnet werden, der ein weiteres Verlagern, also ein Verlagern des Bypass-Ventils 231 durch das Thermoelement aus der zweiten Schaltstellung heraus in Richtung der dritten Schaltstellung verhindert. Ebenso ist es denkbar, eine ausreichende Breite der entsprechenden Schaltstellung vorzusehen. Weiterhin ist eine Leitung 243 vorgesehen, die von der Leitung 57 zu einer ersten Ventilfläche des Bypass-Ventils 231 führt. Darüber hinaus ist eine Leitung 245 vorgesehen, die von der Leitung 227 stromabwärts des Bypass-Ventils 231 zu einer zweiten Ventilfläche des Bypass-Ventils 231 führt, die der ersten Ventilfläche entgegengerichtet ist, sodass die Drücke der Leitungen 57 und 228 das Bypass-Ventil 231 entgegengesetzt beaufschlagen, um das Bypass-Ventil 231 als Differenzdruckventil auszubilden, wobei ein entsprechender Druck aus der Leitung 57 dafür sorgt, dass sich das Bypass-Ventil 231 aus der zweiten Schaltstellung in die dritte Schaltstellung bewegt. Alternativ ist es denkbar, lediglich die Leitung 243 vorzusehen und als dem Druck entgegenwirkende Kraft die Federkraft des Federelements 240 und/oder eines weiteren Federelements zu nutzen, wobei durch die voreinstellbare Federkraft der Druck-Grenzwert einstellbar ist.

Im Folgenden soll die Funktionsweise des thermostatischen Bypass-Ventils 231 erläutert werden. Bei niedrigen Temperaturen, wie beispielsweise bei einem Kaltstart, befindet sich das Bypass-Ventil 231 in seiner ersten Schaltstellung, sodass das durch die Pumpen 7 und 9 geförderte Hydraulikmedium an dem Kühler 183 und an dem Druckfilter 215 vorbei den Kühlungen 221 und/oder 223 zugeführt wird. Dies hat den Vorteil, dass zum einen das bereits kühle Hydraulikmedium zum Kühlen genutzt wird, und zum anderen, dass das im kühlen Zustand aufgrund seiner temperaturabhängigen Viskosität dickflüssigeres Hydraulikmedium nicht durch den Kühler 183 und den Druckfilter 215 gefördert werden muss. Dadurch werden Druckverluste, insbesondere der Rückstaudruck, der sich auf die Fördereinrichtung (Pumpen 7 und 9 und Elektromotor 5) auswirkt, reduziert. Sobald die Temperatur zunimmt und damit die Viskosität des Hydraulikmediums verbessert wird, wächst das Thermoelement und drängt den Stößel 241 gegen den Schieber des Bypass-Ventils 231 derart, dass dieses aus der ersten Schaltstellung (wie dargestellt) in seine zweite Schaltstellung verlagert wird, in welcher der Bypass 225 gesperrt ist. Ab diesem Zeitpunkt wird das Hydraulikmedium durch den Kühler 183 und den Druckfilter 215 zu den Kühlungen 221 und 223 gefördert. Entsteht nunmehr ein Rückstaudruck, beispielsweise aufgrund eines Schaltvorgangs des Volumensteuerventils 185 oder weil der Druckfilter 215 zugesetzt ist oder ein Fehler im Kühler 183 vorliegt, oder übersteigt der Volumenstrom durch Kühler und Druckfilter einen Grenzwert, der zur Beschädigung des Druckfilters 215 und/oder des Kühlers 183 führen könnte, so regelt das Bypassventil 219 ab. Alternativ wirkt sich der Druck über die Leitungen 243 und 245 derart auf das Bypass-Ventil 231 aus, dass dieses aus der zweiten Schaltstellung in seine dritte Schaltstellung verlagert wird, in welcher der Bypass 225 wieder geöffnet ist, sodass das Hydraulikmedium an dem Kühler 183 und dem Druckfilter 215 vorbeigefördert werden kann. Der Bypass 217 kann gemäß einer weiteren Ausführungsform somit auch entfallen. Fällt der Druck über das Bypass-Ventil 231 wieder unter den entsprechenden Grenzwert, so wird das Bypass-Ventil 231 wieder in seine zweite, den Bypass 225 sperrende Schaltstellung durch das Federelement 240 verlagert. Fällt die Temperatur unter einen bestimmten Schwellenwert, so zieht sich das Thermoelement wieder zusammen und das Bypass-Ventil 231 wird aufgrund der Federkraft oder zwangsgeführt durch das Thermoelement wieder zurück in seine erste Schaltstellung verlagert.

Durch die bevorzugte Ausführungsform des Hydraulikkreises 1 bezüglich des Bypass-Ventils 231 werden auch die Pumpen 7, 9 vor zu hohen Rückstaudrücken geschützt, die sonst zu einer Beschädigung des Antriebs oder zu einer zu geringen Versorgung mit Hydraulikmedium führen, oder die das Anlaufen der jeweiligen Pumpe 7, 9 verhindern und/oder eine zu hohe Energieaufnahme verursachen könnten. Bei niedrigen Temperaturen wird somit die Fördereinrichtung entlastet, da nur der Rückstaudruck zum Durchfließen des Bypass-Ventils 231 auf die Pumpen 7, 9 wirkt. Dadurch ist es möglich, die Fördereinrichtung, insbesondere die Pumpen 7, 9, kleiner zu dimensionieren und, wie in dem vorliegenden Ausführungsbeispiel dargestellt, auf die Trennkupplung 11 zu verzichten, den Elektromotor 5 also direkt mit der Pumpe 9 zu verbinden. Darüber hinaus hat dies auch zur Folge, dass die Leistungsendstufen von einem elektronischen Steuergerät zur Ansteuerung des Hydraulikkreises sowie die leistungsführenden Bauelemente kleiner dimensionierbar sind. Aufgrund des thermostatischen Bypass-Ventils 231 wird auf das Druckbegrenzungsventil 191, wie dargestellt, vorzugsweise verzichtet, da die Drucksicherungsfunktion nunmehr das thermostatische Bypass-Ventil 231 übernimmt.

Figur 2 zeigt außerdem weitere Ausführungsformen von aus Figur 1 bekannten Ausbildungen, die zusätzlich zu der Ausbildung des Bypasses 225 vorgesehen werden können.

Alternativ zu der dargestellten und beschriebenen Ausführungsform des Volumensteuerventils 185 in Figur 1 ist gemäß der Ausführungsform in Figur 2 vorgesehen, dass die Schaltstellungen derart vertauscht sind, dass in dem ersten Extremalzustand die Anschlüsse 199 und/oder 201 mit dem Anschluss 205 oder 207 verbunden und die übrigen Anschlüsse des Volumensteuerventils 185 blind geschaltet sind, in dem zweiten Extremalzustand die Anschlüsse 201 und/oder 199 mit dem Anschluss 203 verbunden und die übrigen Anschlüsse blind geschaltet sind, und in dem dritten Extremalzustand die Anschlüsse 199 und/oder 201 mit dem Anschluss 207 oder 205 verbunden und die übrigen Anschlüsse blind geschaltet sind. Durch ein derartiges Vertauschen der Schaltstellungen wird vermieden, dass bei einem getakteten Ansteuern des Volumensteuerventils 185 zum Einstellen eines gewünschten Hydraulikmediumstroms für eine der Kupplungen K1 oder K2 ein Volumenstrom auch zur anderen Kupplung K2 beziehungsweise K1 fließt. Stattdessen wird der beim getakteten, nicht zur jeweiligen Kupplung K1 oder K2 geführte Volumenstrom in den Tank 3 geleitet. Bei der tatsächlichen Ausbildung des Volumensteuerventils 185 als 4/3-Wege-Proportionalventil sind die Anschlüsse 199 und 201 stets als gemeinsamer beziehungsweise einziger Anschluss der Leitung 181 an dem Volumensteuerventil 185 zu verstehen, so dass tatsächlich nur einer der beiden Anschlüsse 199, 201 an dem Volumensteuerventil 185 vorgesehen ist.

Alternativ zu der in Figur 1 dargestellten Ausführungsform des Schaltventils 35 ist das Schaltventil 35 gemäß dem vorliegenden Ausführungsbeispiel als 2/3-Wege-Schaltventil ausgebildet, das lediglich die Anschlüsse 33 und 43 umfasst. Anstelle der rückführenden Leitungen 68 und 63 sowie der Ventilflächen 67 und 65 ist das Schaltventil 35 mit einer Tellerfeder 247 versehen, durch die eine Schalthysterese des Schaltventils 35, wie oben beschrieben, bewirkt wird. Der Tellerfeder 247 wirkt dabei lediglich der Druck aus der Leitung 49 entgegen.

Alternativ zu dem Drucksensor 55 ist gemäß dem Ausführungsbeispiel der Figur 2 vorgesehen, dass ein Ladebedarf des Speichers 53 durch die Stromaufnahme des Elektromotors 5 erkannt wird. Je nach dem, in welcher Stellung sich das Schaltventil 35 befindet, wirken unterschiedliche Rückstaudrücke, die sich in unterschiedlichen Leistungen des Elektromotors 5 auswirken. Durch die Stromaufnahme kann dabei auf die Stellung des Schaltventils 35 geschlossen und dadurch ein Speicherladebedarf erkannt werden.

Darüber hinaus zeigt Figur 2 Alternativen zu der Ansteuerung der Kupplungen K1 und K2. Hierbei ist den Kupplungen K1 und K2 jeweils lediglich das Druckregelventil 101 beziehungsweise 101' vorgeschaltet, wobei die Referenz-Leitung 115 nicht stromabwärts der Kupplung K1, sondern stromaufwärts der Kupplung K1 beziehungsweise K2 abzweigt und den Druck zurückführt. Der jeweiligen Kupplung ist stattdessen ein Notschaltsystem 249 beziehungsweise 249' zugeordnet, das bei Erfassen eines unplausiblen Kupplungsdrucks die jeweilige Kupplung drucklos schaltet. Weiterhin sind dabei den Kupplungen K1 und K2 mehrere Druckfilter vorgeschaltet, wobei zumindest der Kupplung K1 ein weiterer Drucksensor vorgeschaltet ist, dem wiederum ein Druckfilter vorgeschaltet ist.

Figur 2 zeigt darüber hinaus ein weiteres Ausführungsbeispiel der Gangsteller, das sich im Wesentlichen darin von dem in Figur 1 dargestellten Gangsteller unterscheidet, dass der jeweilige Kolben 173 ein druckgeregeltes Entlüftungsventil 251 und der jeweilige Gangstellerzylinder 155, 155', 157, 157' ebenfalls ein Entlüftungsventil 253 umfasst. Dabei ist der Ausgang des Entlüftungsventils 251 der gleichen Kammer zugeordnet wie der Einlass des Entlüftungsventils 253, dessen Ausgang wiederum dem Tank 3 zugeordnet ist. Hierdurch ist es möglich, beide Kammern des jeweiligen Gangstellers zu entlüften, sodass der jeweilige Gangsteller stets schnell ansprechbar beziehungsweise betätigbar ist. Darüber hinaus sind den Gangstellern, den Volumensteuerventilen 159, 159', 179, 179' sowie dem Druckregelventil 141 weitere Druckfilter zugeordnet.

Durch das Vorsehen des Schaltventils 35 kann darüber hinaus auf das Druckbegrenzungsventil 27 verzichtet werden. Von den hier beschriebenen alternativen Ausführungsformen, die in Figur 2 dargestellt sind, können selbstverständlich eine oder mehrere unabhängig voneinander in den Hydraulikkreis 1 gemäß Figur 1 integriert werden.

### BEZUGSZEICHENLISTE

- 1: Hydraulikkreis
- 3: Tank
- 5: Elektromotor
- 7: erste Pumpe
- 9: zweite Pumpe
- 11: Trennelement
- 13: Leitung
- 15: Leitung
- 17: T-Stück
- 19: Leitung
- 21: Saugfilter
- 23: Leitung
- 25: Abzweigung
- 27: Druckbegrenzungsventil
- 29: Leitung
- 31: Druckfilter
- 33: Anschluss
- 35: Schaltventil
- 37: Bypass
- 39: Differenzdruckventil
- 41: Anschluss
- 43: Anschluss
- 45: Anschluss
- 47: Anschluss
- 49: Leitung
- 51: Rückschlagventil
- 53: Druckspeicher
- 55: Druckerfassungseinrichtung
- 57: Leitung
- 59: Hydraulikteilkreis
- 61: Leitung
- 63: Leitung
- 65: Ventilfläche
- 67: Ventilfläche
- 69: Leitung
- 71: Abzweigung
- 73: Leitung
- 75: Abzweigung
- 77: Abzweigung
- 79: Abzweigung
- 81: Leitung
- 83: Leitung
- 85: Leitung
- 87: Teilgetriebekreis
- 89: Anschluss
- 91: Schaltventil
- 91': Schaltventil
- 93: Anschluss
- 95: Anschluss
- 97: Leitung
- 99: Anschluss
- 101: Druckregelventil
- 101': Druckregelventil
- 103: Anschluss
- 105: Leitung
- 107: Anschluss
- 109: Leitung
- 111: Rückschlagventil
- 113: Abzweigung
- 115: Leitung
- 117: Abzweigung
- 119: Druckerfassungseinrichtung
- 121: Pilotventil
- 121': Pilotventil
- 123: elektrische Ansteuerung
- 125: Anschluss
- 127: Anschluss
- 129: Anschluss
- 131: Leitung
- 133: Abzweigung
- 135: Leitung
- 137: Ventilfläche
- 139: Teilgetriebekreis
- 141: Druckregelventil
- 143: Leitung
- 145: Abzweigung
- 147: Leitung
- 149: Leitung
- 151: Abzweigung
- 153: Leitung
- 155: Gangstellerzylinder
- 155': Gangstellerzylinder
- 157: Gangstellerzylinder
- 157': Gangstellerzylinder
- 159: Volumensteuerventil
- 159': Volumensteuerventil
- 161: Anschluss
- 163: Anschluss
- 165: Anschluss
- 167: Anschluss
- 169: Kammer
- 171: Kammer
- 173: Kolben
- 175: Abzweigung
- 177: Leitung
- 179: Volumensteuerventil
- 179': Volumensteuerventil
- 181: Leitung
- 183: Kühler
- 185: Volumensteuerventil
- 187: Abzweigung
- 189: Leitung
- 191: Druckbegrenzungsventil
- 193: Abzweigung
- 195: Bypass
- 197: Differenzdruckventil
- 199: Anschluss
- 201: Anschluss
- 203: Anschluss
- 205: Anschluss
- 207: Anschluss
- 209: Leitung
- 211: Abzweigung
- 213: Leitung
- 215: Druckfilter
- 217: Bypass
- 219: Differenzdruckventil
- 221: Kühlung
- 223: Kühlung
- 225: Bypass
- 227: Leitung
- 228: Leitung
- 229: Knotenpunkt
- 231: Bypass-Ventil
- 233: Anschluss
- 235: Anschluss
- 237: Knotenpunkt
- 239: Thermoeinheit
- 240: Federelement
- 241: Stößel
- 243: Leitung
- 245: Leitung
- 247: Tellerfeder
- 249: Notsystem
- 249': Notsystem
- 251: Entlüftungskanal
- 253: Entlüftungsventil
- K1: Kupplung
- K2: Kupplung

## Patentansprüche

1. Kupplungsgetriebe, insbesondere Doppelkupplungsgetriebe, mit einem Hydraulikkreis (1) zum Betätigen und/oder Kühlen des Kupplungsgetriebes, der in einer Leitung (181) wenigstens einen Kühler (183) zum Kühlen von durch wenigstens eine Pumpe (7,9) gefördertem Hydraulikmedium umfasst, wobei dem Kühler (183) ein ein thermostatisches Bypass-Ventil (231) aufweisender Bypass (225) zugeordnet ist, der eine stromaufwärts des Kühlers (183) von der Leitung (181) abzweigende Leitung (227) und eine mit der Leitung (181) stromabwärts des Kühlers (183) verbundene Leitung (228) aufweist, wobei das thermostatische Bypass-Ventil (231) zwei Anschlüsse (233,235) und drei Schaltstellungen aufweist, wobei der eine Anschluss (233) mit der Leitung (227) stromaufwärts des Kühlers (183) und der andere Anschluss (235) mit der Leitung (228) stromabwärts des Kühlers (183) verbunden ist, und wobei das Bypass-Ventil (231) in eine erste Schaltstellung, in der der Bypass geöffnet ist, durch Federkraft, aus der ersten Schaltstellung in eine zweite Schaltstellung, in der der Bypass gesperrt ist, entgegen der Federkraft durch ein sich mit zunehmender Temperatur ausdehnendes Thermoelement und aus der zweiten Schaltstellung in eine dritte Schaltstellung, in der der Bypass geöffnet ist, entgegen der Federkraft durch einen einen vorgebbaren Grenzwert übersteigenden Differenzdruck verfahrbar ist, **dadurch gekennzeichnet, dass** das thermostatische Bypass-Ventil (231) als 2/3-Wege-Ventil ausgebildet ist.

2. Kupplungsgetriebe nach Anspruch 1, **dadurch gekennzeichnet, dass** das Thermoelement als thermisches Wachselement ausgebildet ist, das mit zunehmender Temperatur wächst.

3. Kupplungsgetriebe nach einem der vorhergehenden Ansprüche, **dadurch gekennzeichnet, dass** das Bypass-Ventil (231) einen die Schaltstellung beeinflussenden, verlagerbaren Stößel (241) aufweist, der mit dem Thermoelement wirkverbunden ist.

4. Kupplungsgetriebe nach Anspruch 3, **dadurch gekennzeichnet, dass** das Bypass-Ventil (231), das Thermoelement und/oder der Stößel (241) derart ausgebildet sind, dass unabhängig von der auf das Thermoelement wirkenden Temperatur das thermostatische Bypass-Ventil (231) maximal in die zweite Schaltstellung verfahrbar ist.

5. Kupplungsgetriebe nach einem der vorhergehenden Ansprüche, **dadurch gekennzeichnet, dass** zur Ausbildung als Differenzdruckventil zum Erreichen der dritten Schaltstellung wenigstens einer Ventilfläche des thermostatischen Bypass-Ventils (231) der Druck stromaufwärts oder stromabwärts des thermostatischen Bypass-Ventils (231) zugeführt wird.

6. Kupplungsgetriebe nach Anspruch 3, **dadurch gekennzeichnet, dass** der Stößel (241) durch das Thermoelement zwangsgeführt ist, oder dass dem Stößel ein Federelement zugeordnet ist, das dem Thermoelement entgegenwirkt.

7. Kupplungsgetriebe nach einem der vorhergehenden Ansprüche, **dadurch gekennzeichnet, dass** der Bypass (225) dem Kühler (183) und einem Druckfilter (215) zugeordnet ist.

## Claims

1. Clutch transmission, in particular a dual clutch transmission, comprising a hydraulic circuit (1) for actuating and/or cooling the clutch transmission, the hydraulic circuit (1) comprising at least one cooler (183) arranged in a conduit (181) for cooling a hydraulic medium conveyed by at least one pump (7, 9), wherein a bypass (225) is associated with the cooler (183), the bypass (225) comprising a thermostatic bypass valve (231) and a conduit (227) branching off from the conduit (181) upstream of the cooler (183) and a conduit (228) connected to the conduit (181) downstream of the cooler (183), **wherein** the thermostatic bypass valve (231) comprises two ports (233, 235) and has three switching positions, wherein one port (233) is connected to the conduit (227) upstream of the cooler (183) and the other port (235) is connected to the conduit (228) downstream of the cooler (183), and wherein the bypass valve (231) is configured for movement under a spring force into a first switching position where the bypass is open, for movement from the first switching position against the spring force by a thermal element that expands with increasing temperature into a second switching position where the bypass is closed, and for movement from the second switching position against the spring force due to a differential pressure that exceeds a predetermined threshold into a third switching position where the bypass is open, **characterized in that** the thermostatic bypass valve (231) is configured as a 2/3-way valve.

2. Clutch transmission according to claim 1, **characterized in that** the thermal element is formed as an expanding thermal element which increases in size with increasing temperature.

3. Clutch transmission according to any of the preceding claims, **characterized in that** the bypass valve (231) comprises a movable piston (241) which influences the switching position and is operatively connected to the thermal element.

4. Clutch transmission according to claim 3, **characterized in that** the bypass valve (231), the thermal element and/or the piston (241) are configured such that the thermostatic bypass valve (231) is prevented from moving beyond the second switching position regardless of the temperature of the thermal element.

5. Clutch transmission according to any of the preceding claims, **characterized in that** the thermostatic bypass valve is constructed as a differential pressure valve, a differential pressure being applied, to attain the third switching position, to at least one valve face of the thermostatic bypass valve (231) disposed upstream or downstream of the thermostatic bypass valve (231).

6. Clutch transmission according to claim 3, **characterized in that** the piston (241) is positively guided by the thermal element, or a spring element applying a counterforce on the thermal element is associated with the piston.

7. Clutch transmission according to any of the preceding claims, **characterized in that** the bypass (225) is associated with the cooler (183) and with a pressure filter (215).

## Revendications

1. Boîte de vitesses à embrayage, en particulier boîte de vitesses à double embrayage, comprenant un circuit hydraulique (1) pour la commande et/ou le refroidissement de la boîte de vitesses à embrayage, qui comprend dans une conduite (181) au moins un radiateur (183) pour refroidir le milieu hydraulique acheminé par au moins une pompe (7, 9), dans laquelle est affectée au radiateur (183) une dérivation (225) présentant une soupape de dérivation thermostatique (231), laquelle dérivation présente une conduite (227) bifurquant de la conduite (181) en amont du radiateur (183) et une conduite (228) raccordée à la conduite (181) en aval du radiateur (183), dans laquelle la soupape de dérivation thermostatique (231) présente deux raccords (233, 235) et trois positions de commutation, dans laquelle le premier raccord (233) est raccordé à la conduite (227) en amont du radiateur (183) et l'autre raccord (235) est raccordé à la conduite (228) en aval du radiateur (183) et dans laquelle la soupape de dérivation (231) peut se déplacer dans une première position de commutation, dans laquelle la soupape est ouverte, par la force d'un ressort, de la première position de commutation à une deuxième position de commutation, dans laquelle la dérivation est bloquée, à l'encontre de la force du ressort par un thermo-élément qui se dilate lorsque la température augmente, et de la deuxième position de commutation à une troisième position de commutation, dans laquelle la dérivation est ouverte, à l'encontre de la force du ressort par une pression différentielle dépassant une valeur limite prédéterminable, **caractérisée en ce que** la soupape de dérivation thermostatique (231) est conçue en soupape à 2/3 voies.

2. Boîte de vitesses à embrayage selon la revendication 1, **caractérisée en ce que** le thermo-élément est conçu sous forme d'un élément d'expansion thermique qui se dilate lorsque la température augmente.

3. Boîte de vitesses à embrayage selon l'une quelconque des revendications précédentes, **caractérisée en ce que** la soupape de dérivation (231) présente un coulisseau déplaçable (241) influençant la position de commutation, qui coopère avec le thermo-élément.

4. Boîte de vitesses à embrayage selon la revendication 3, **caractérisée en ce que** la soupape de dérivation (231), le thermo-élément et/ou le coulisseau (241) sont conçus pour que la soupape de dérivation thermoplastique (231) puisse au maximum se déplacer dans la deuxième position de commutation indépendamment de la température agissant sur le thermo-élément.

5. Boîte de vitesses à embrayage selon l'une quelconque des revendications précédentes, **caractérisée en ce que**, pour former la soupape de compression différentielle afin d'atteindre la troisième position de commutation au moins d'une surface de soupape de la soupape de dérivation thermostatique (231) la pression est acheminée en amont ou en aval de la soupape de dérivation thermostatique (231).

6. Boîte de vitesses à embrayage selon la revendication 3, **caractérisée en ce que** le coulisseau (241) est guidé à force par le thermo-élément ou l'on affecte au coulisseau un élément à ressort qui s'oppose au thermo-élément.

7. Boîte de vitesses à embrayage selon l'une quelconque des revendications précédentes, **caractérisée en ce que** la dérivation (225) est affectée au radiateur (183) et à un filtre-presse (215).
